# EUROPÄISCHE PATENTANMELDUNG

(11) **EP 1 586 417 A2**
(43) Veröffentlichungstag der Anmeldung: **19.10.2005**
(21) Anmeldenummer: 05006196.9
(22) Anmeldetag: 22.03.2005
(51) Int. Cl.: B24D 7/06, B24B 55/06

(54) **Schleifteller mit Eigenabsaugeinrichtung und Verfahren zum Entfernen von Schleifpartikeln**

(30) Priorität: 17.04.2004 DE 102004018727
(71) Anmelder: Jöst, Peter, 69518 Abtsteinach (DE)
(72) Erfinder: Jöst, Peter, 69518 Abtsteinach (DE)
(74) Vertreter: Knoblauch, Andreas

(57) **Zusammenfassung**

Es wird ein Schleifteller (1) angegeben mit einer Rotationsachse (5) und einer Befestigungsfläche zum Befestigen eines Schleifmittels (2).

Man möchte die Absaugwirkung an einem Schleifteller effektiver gestalten.

Hierzu ist vorgesehen, daß der Schleifteller (1) als Eigenabsaugeinrichtung ausgebildet ist.

## Beschreibung

Die Erfindung betrifft einen Schleifteller mit einer Rotationsachse und einer Befestigungsfläche zum Befestigen eines Schleifmittels.

Ein Schleifteller dient dazu, ein Schleifmittel zu tragen. Zum Schleifen einer Oberfläche wird er über eine Antriebswelle durch einen Antrieb in Rotation versetzt. Durch die Rotation des Schleiftellers mit dem daran befestigten Schleifmittel entstehen auf der zu bearbeitenden Fläche Schleifpartikel. Dabei besteht die Gefahr, daß die Schleifpartikel oder der Schleifstaub das Schleifmittel zusetzen, was sich ungünstig auf den weiteren Schleifvorgang auswirkt. Das Schleifmittel verliert dann seine abrasive Wirkung bereits vor einem Zeitpunkt, an dem seine Schleifkörner stumpf geworden sind. Diese Schleifpartikel sollen möglichst von der abzuschleifenden Oberfläche und von der Schleiffläche des Schleifmittels entfernt werden, damit weiterhin die Schleifwirkung des Schleifmittels erhalten bleibt.

Hierzu ist bekannt, Schleifmittel mit Durchtrittsöffnungen zu verwenden, die die Schleiffläche mit der Rückseite des Schleifmittels verbinden. Diese Durchtrittsöffnungen sorgen dafür, daß die Schleifpartikel auf die Rückseite des Schleifmittels gelangen. Die Durchtrittsöffnungen werden zu Öffnungen im Schleifteller ausgerichtet, die durch die Achse des Schleiftellers hindurch mit einer Fremdabsaugvorrichtung in Verbindung stehen. Die durch die Öffnungen hindurchtretenden Schleifpartikel werden dann durch die Fremdabsaugvorrichtung weiter abtransportiert. Dies setzt aber zum einen eine Fremdabsaugung und zum anderen eine hohle Antriebswelle voraus, was nicht immer gegeben ist.

Andere Schleifmaschinen sind mit einer Saughaube versehen. Die Saughaube ist feststehend und umschließt den rotierenden Schleifteller in einem geringen Abstand. Durch eine an der Saughaube angeschlossene Fremdabsaugvorrichtung wird eine Saugwirkung erzeugt. Durch diese Saugwirkung bewegen sich die Partikel in der Befestigungsschicht des Schleiftellers und zwischen dem Schleifmittel und der geschliffenen Oberfläche radial nach außen, gelangen in einen Ringspalt zwischen Schleifteller und Saughaube und werden von der angeschlossenen Absaugvorrichtung aufgenommen. Diese Absaugung hat jedoch nur eine beschränkte Wirkung.

Der Erfindung liegt die Aufgabe zugrunde, die Absaugwirkung an einem Schleifteller effektiver zu gestalten.

Diese Aufgabe wird dadurch gelöst, daß der Schleifteller als Eigenabsaugeinrichtung ausgebildet ist.

Ein solcher Schleifteller benötigt keine am Schleifteller angeschlossene Absaugvorrichtung, um Schleifpartikel von der Schleiffläche auf definierten Wegen abzutransportieren. Die Schleifpartikel werden aufgrund der Eigenschaften des Schleiftellers selbständig abtransportiert. Der Schleifteller erzeugt eine Absaugung selbsttätig, einfach durch seine Rotation. Dies wird hier als Eigenabsaugeinrichtung verstanden. Eine Eigenabsaugeinrichtung an einem Schleifteller nutzt die Bewegung des Schleiftellers beim Schleifen. Auch eine Kombination einer Rotationsbewegung mit einer Translationsbewegung ist möglich, z.B. Schwingbewegungen des Schleiftellers. Durch diese Bewegungen wird ein Saugeffekt am Schleifteller hervorgerufen. Im Gegensatz hierzu wird bei Schleiftellern mit Fremdabsaugvorrichtungen, z.B. in Form eines Staubsaugers, eine von außen zusätzlich bereitgestellte Vorrichtung genutzt, um Schleifpartikel abzusaugen.

Bevorzugterweise ist die Eigenabsaugeinrichtung als Radiallüftereinrichtung ausgebildet. Bei einem Schleifteller mit einer Radiallüftereinrichtung werden die Schleifpartikel und die dazu umgebenden Luftmassen in Radialrichtung bewegt. Dies ist eine besonders effektive Art, die Bewegung des Schleiftellers für eine Eigenabsäugung zu nutzen. Sobald Schleifpartikel durch die Rotationsbewegung des Schleiftellers entstehen, werden diese von der Radiallüftereinrichtung von der Schleiffläche wegbewegt. Damit diese Bewegung zustande kommt, wird die Rotationsbewegung des angetriebenen Schleiftellers für die Saugwirkung genutzt. Die Saugwirkung der Radiallüftereinrichtung wird durch eine konstruktive Gestaltung am Schleifteller hervorgerufen. Hierzu ist für die Saugwirkung die Drehzahl und die Geometrie der Radiallüftereinrichtung von Bedeutung.

In bevorzugter Weise weist die Befestigungsfläche eine Befestigungseinrichtung auf, die parallel zur Befestigungsfläche partikeldurchströmbar ist. Eine solche Befestigungsfläche erhält somit zwei Funktionen. Ihre ursprüngliche Funktion, das Schleifmittel an dem Schleifteller festzuhalten, wird durch die Funktion erweitert, Wege für den Abtransport der Schleifpartikel bereitzustellen. Diese Wege können auch vom Schleifmittel selbst auf seiner Rückseite der Schleiffläche bereitgestellt werden. Dadurch, daß die Befestigungseinrichtung parallel zur Befestigungsfläche partikeldurchströmbar ist, können sich Partikel parallel zur abzuschleifenden Oberfläche bewegen, ohne daß sich die Schleiffläche des Schleifmittels mit Partikeln zusetzt. So bleibt die Wirkung des Schleifmittels während des Schleifens vorhanden.

Vorzugsweise weist die Radiallüftereinrichtung mindestens eine Ansaugöffnung und mindestens eine Austrittsöffnung auf und die Ansaugöffnung ist näher zur Rotationsachse des Schleiftellers angeordnet als die Austrittsöffnung, wobei die Ansaugöffnung und die Austrittsöffnung über mindestens einen Beschleunigungsraum in Verbindung stehen, der mindestens eine zwischen radial innen und radial außen angeordnete Beschleunigungseinrichtung aufweist. Auf diese Weise trägt die Geometrie der Radiallüftereinrichtung dazu bei, daß allein durch die Rotationsbewegung des Schleiftellers mit der Radiallüftereinrichtung bereits ein Saugeffekt entsteht. Dieser Saugeffekt ist um so größer, je schneller die Radiallüftereinrichtung rotiert und je weiter Ansaugöffnungen und Austrittsöffnungen voneinander entfernt angeordnet sind. Durch den Saugeffekt bewegen sich die Partikel von der abzuschleifenden Oberfläche in Richtung Ansaugöffnung und durchströmen diese. Danach bewegen sich die Partikel weiter in Beschleunigungsräumen radial von innen nach außen und gelangen zu Austrittsöffnungen der Radiallüftereinrichtung. Dort können die Partikel aufgefangen werden. Für den Abtransport der Schleifpartikel von der Schleiffläche bis zu den Austrittsöffnungen der Radiallüftereinrichtung ist somit keine Fremdabsaugvorrichtung notwendig, da die Radiallüftereinrichtung eine Eigenabsaugung aufweist, die durch die gewählte Geometrie und die Rotationsbewegung zustande kommt. Die Radiallüftereinrichtung sorgt dafür, daß die Schleifpartikel von der Schleiffläche kontinuierlich entfernt werden und an definierten Stellen, nämlich an den Austrittsöffnungen der Radiallüftereinrichtung, aufgefangen werden können oder zum Weitertransport zur Verfügung stehen.

Bevorzugterweise begrenzt die Beschleunigungseinrichtung als eine nicht unterbrochene Begrenzung den Beschleunigungsraum. Die Beschleunigungseinrichtung sorgt dafür, daß die Luft mit den Schleifpartikeln durch die von der Rotationsbewegung des Schleiftellers hervorgerufene Zentrifugalkraft in tangentialer Richtung bewegt wird. Hierdurch wird ein radialer Saugeffekt erzeugt, der die Luft und die Partikel von radial innen nach radial außen bewegt.

Vorzugsweise ist die Beschleunigungseinrichtung luftundurchlässig. Da die Beschleunigungseinrichtung Schleifpartikel und Luft in den Beschleunigungsräumen in Bewegung versetzt, ist es besonders effektiv, wenn die Beschleunigungseinrichtung selbst nicht luftdurchlässig ist.

Bevorzugterweise ist die Summe der Flächen der Austrittsöffnungen mindestens genau so groß wie die Summe der Flächen der Ansaugöffnungen. Bei dieser Ausgestaltung der Öffnungsflächen ist die Saugwirkung des Schleiftellers besonders wirksam. Auch werden bei dieser Ausführungsform Engpässe beim Abtransportieren der Schleifpartikel vermieden. Die Schleifpartikel passieren zunächst die Ansaugöffnungen und gelangen dann weiter zu den Austrittsöffnungen. Da die Summe der Flächen der Austrittsöffnungen größer ist als die Summe der Flächen der Ansaugöffnungen, steht auf jeden Fall beim Passieren der Austrittsöffnungen genug Raum für die Schleifpartikel zur Verfügung, so daß diese ungehindert aus der Radiallüftereinrichtung austreten können.

Vorteilhafterweise sind die Austrittsöffnungen am Umfang des Schleiftellers gleichmäßig verteilt. Bei einer gleichmäßigen Rotation der Radiallüftereinrichtung wird so erreicht, daß aus den Austrittsöffnungen auch gleiche Mengen an Schleifpartikeln herausströmen. Dies vermeidet eine Überlastung und ein Anstauen der Schleifpartikel in einzelnen Austrittsöffnungen.

Es ist bevorzugt, daß der Beschleunigungsraum eine Umlenkung aufweist. Eine Umlenkung ermöglicht, daß Raumverhältnisse in der Radiallüftereinrichtung effektiv genutzt werden. So können beispielsweise Austrittsöffnungen in der Mantelfläche des Schleiftellers angeordnet sein, während Ansaugöffnungen der abzuschleifenden Oberfläche zugewandt sind. Die Mantelfläche ist ein geeigneter Ort, um von den Ansaugöffnungen einen möglichst großen Abstand zu den Austrittsöffnungen zu erreichen.

Vorzugsweise weist der Beschleunigungsraum Luftleitmittel auf, die den Schleifpartikeln eine Austrittsrichtung mit einer axialen Richtungskomponente aus den Austrittsöffnungen vermitteln. Luftleitmittel können in den Begrenzungen des Beschleunigungsraums integriert sein oder auch als separate Elemente im Beschleunigungsraum angeordnet sein. Die Luftleitmittel dienen dazu, den Luftstrom mit den Schleifpartikeln beim Verlassen des Beschleunigungsraums aus den Austrittsöffnungen in eine bestimmte Richtung zu lenken. Praktischerweise werden die Schleifpartikel beim Austritt aus den Austrittsöffnungen von der Ebene der Befestigungsfläche des Schleiftellers weg geleitet. Ihre Bewegungen weisen dann eine axiale Richtungskomponente auf.

Bevorzugterweise weist die Radiallüftereinrichtung eine einzige Ansaugöffnung auf, die in der radialen Mitte der Radiallüftereinrichtung angeordnet ist. Eine einzige Ansaugöffnung in der radialen Mitte der Radiallüftereinrichtung hat den Vorteil, daß so die Raumverhältnisse günstig genutzt werden. Mit dieser Ausgestaltung wird erreicht, daß ein möglichst großer Abstand zwischen den beispielsweise am Umfang verteilten Austrittsöffnungen und der mittigen Ansaugöffnung hergestellt wird. Dies verbessert den Saugeffekt der Radiallüftereinrichtung.

In besonders bevorzugter Weise weist die Befestigungsfläche des Schleiftellers eine Klettadaptionsschicht auf. Die Befestigungsfläche kann in Form einer Klettadaptionsschicht eine angrenzende Klettadaptionsschicht des Schleifmittels erfassen, um so eine haltbare Verbindung während der Rotation von Schleifteller und Schleifmittel herzustellen. Eine Klettadaptionsverbindung ist außerdem wieder gut lösbar, so daß ohne weitere Hilfsmittel das Schleifmittel ausgetauscht werden kann. Eine Klettadaptionsschicht ist außerdem partikeldurchströmbar.

Zweckmäßigerweise weist der Schleifteller eine Auffangeinrichtung auf. Auf diese Weise können die Schleifpartikel mit einer einzigen Vorrichtung aufgefangen oder weiter abtransportiert werden. Eine Auffangeinrichtung kann beispielsweise eine Haube sein, die mit einer Fremdäbsaugvorrichtung in Form eines Staubsaugers verbunden ist.

Vorteilhafterweise ist die Auffangeinrichtung mit Abstand zur Ebene der Befestigungsfläche des Schleiftellers angeordnet. Durch den Abstand der Auffangeinrichtung zur Ebene der Befestigungsfläche entsteht auch ein Abstand zwischen der Auffangeinrichtung und der zu bearbeitenden Oberfläche. Eine solche Anordnung verhindert unerwünschte Reibkontakte, die zu einer nicht beabsichtigten Veränderung der gerade bearbeiteten Oberfläche führen können, wie z.B. in Form von Kratzern. Auch kann derjenige, der gerade die abzuschleifende Oberfläche bearbeitet, das Schleifergebnis sofort wahrnehmen, ohne daß die Auffangeinrichtung den Blick versperrt.

In einer weiteren Ausgestaltungsform ist vorgesehen, daß der Schleifteller als Eigenabsaugaufsatz ausgebildet ist. Dieser Eigenabsaugaufsatz kann an einem Schleifmittelhalter befestigt werden, der keine Eigenabsaugeinrichtung aufweist. So ist es möglich, an dem Schleifmittelhalter ebenfalls eine Eigenabsaugwirkung zu erzeugen.

Bevorzugterweise weist der Eigenabsaugaufsatz eine Kontaktfläche zum Befestigen des Eigenabsaugaufsatzes an einen Schleifmittelhalter auf. Die Kontaktfläche des Eigenabsaugaufsatzes kann so gestaltet sein, daß sie flächig an eine Fläche des Schleifmittelhalters grenzt, ohne daß die Funktion des Eigenabsaugaufsatzes beeinflußt wird.

Vorzugsweise weist die Kontaktfläche eine Klettadaptionsschicht auf. Schleifmittelhalter weisen oft bereits eine Klettadaptionsschicht auf. Mit einer weiteren Klettadaptionsschicht am Eigenabsaugaufsatz ist es somit sehr leicht möglich, den Schleifmittelhalter mit dem Eigenabsaugaufsatz zu verbinden.

Zweckmäßigerweise weist der Eigenabsaugaufsatz eine Positionieranordnung auf. Mit einer Positionieranordnung können der Schleifteller mit Eigenabsaugeinrichtung und der Schleifmittelhalter zueinander ausgerichtet werden. Während der gemeinsamen Schleifbewegung wird so gewährleistet, daß sich der Schleifteller und der Schleifmittelhalter nicht gegeneinander verschieben und zueinander zentriert sind. Die Positionieranordnung kann auch einstückig mit dem Eigenabsaugaufsatz ausgebildet sein.

Bei einer Schleiftelleranordnung mit einem Schleifteller und einem Schleifmittel, wobei der Schleifteller eine Rotationsachse und eine Befestigungsfläche zum Befestigen eines Schleifmittels aufweist, wird die Aufgabe auch dadurch gelöst, daß das Schleifmittel Durchtrittsöffnungen aufweist, die mit einer Eigenabsaugeinrichtung des Schleiftellers in Verbindung stehen.

Während sich der Schleifteller und die Eigenabsaugeinrichtung beispielsweise um eine gemeinsame Rotationsachse drehen, entstehen am Schleifmittel durch die Rotationsbewegung Schleifpartikel. Diese Schleifpartikel können durch die vorhandenen Durchtrittsöffnungen des Schleifmittels abtransportiert werden. Hierfür sorgt die Eigenabsaugeinrichtung, die mit den Durchtrittsöffnungen in Verbindung steht. Durch die Saugwirkung der Eigenabsaugeinrichtung gelangen die Schleifpartikel auf die Rückseite des Schleifmittels und können von dort aus weiter mit Hilfe der Eigenabsaugeinrichtung bewegt werden.

Es ist bevorzugt, daß die Durchtrittsöffnungen des Schleifmittels mit Ansaugöffnungen der Eigenabsaugeinrichtung über eine radial partikeldurchströmbare Klettadaptionsvorrichtung in Verbindung stehen, wobei die Klettadaptionsvorrichtung aus einer Klettadaptionsschicht des Schleiftellers und einer Klettadaptionsschicht des Schleifmittels gebildet ist. Eine Klettadaptionsschicht am Schleifteller und auch am Schleifmittel ist eine einfache Möglichkeit, Schleifteller und Schleifmittel miteinander zu verbinden. Ist mindestens eine der Klettadaptionsschichten partikeldurchströmbar, so können sich die Schleifpartikel in dieser Klettadaptionsvorrichtung radial in Richtung der Ansaugöffnungen bewegen. Bei den vorwiegenden Klettadaptionsvorrichtungen sind beide Klettadaptionsschichten partikeldurchströmbar.

In vorteilhafter Weise ist die Eigenabsaugeinrichtung an eine Fremdabsaugvorrichtung angeschlossen. Nach dem Austritt aus den Austrittsöffnungen können so die Schleifpartikel weitertransportiert werden und in der Fremdabsaugvorrichtung endgültig gesammelt werden.

Bei einem Verfahren zum Entfernen von Schleifpartikeln auf einer Schleiffläche eines Schleifmittels an einem rotierenden Schleifteller wird die erfindungsgemäße Aufgabe auch dadurch gelöst, daß der Schleifteller mit Hilfe einer Eigenabsaugeinrichtung die Schleifpartikel von der Schleiffläche absaugt.

Die Eigenabsaugeinrichtung kann dabei im Schleifteller integriert oder auch als Aufsatz am Schleifteller befestigt sein. Die Schleifpartikel werden auf definierten Wegen der Schleiffläche entzogen, so daß neu anfallende Schleifpartikel während des Schleifvorgangs kontinuierlich durch die Saugwirkung der Eigenabsaugeinrichtung abtransportiert werden.

Vorzugsweise bewegt die Eigenabsaugeinrichtung des Schleiftellers die Schleifpartikel zunächst in einer ersten Schicht radial nach innen in Richtung mindestens einer Ansaugöffnung und bewegt nach dem Durchtritt durch eine Ansaugöffnung die Schleifpartikel in einer zweiten Schicht radial nach außen. Da die Ansaugöffnungen radial weiter innen liegen als die Austrittsöffnungen, bewegen sich die Schleifpartikel zunächst radial nach innen. Nach dem Durchtritt durch die Ansaugöffnungen werden die Schleifpartikel nach außen durch die Saugwirkung der Eigenabsaugeinrichtung des Schleiftellers befördert. Die erste Schicht ist beispielsweise eine Klettadaptionsschicht und die zweite Schicht stellt beispielsweise den Beschleunigungsraum der Eigenabsaugeinrichtung dar. Beide Schichten stehen über mindestens eine Ansaugöffnung in Verbindung.

Die Erfindung wird im folgenden anhand von bevorzugten Ausführungsbeispielen in Verbindung mit der Zeichnung beschrieben. Hierin zeigen:
- Fig. 1: eine erste Ausführungsform eines Schleiftellers in einer schematischen Gesamtansicht,
- Fig. 2: einen Schnitt A-A durch den Schleifteller mit befestigtem Schleifmittel nach Fig. 1 und einer Auffangeinrichtung,
- Fig. 3: einen Schnitt B-B durch das Schleifmittel nach Fig. 2,
- Fig. 4: einen Schnitt C-C durch den Schleifteller nach Fig. 2,
- Fig. 5: eine zweite Ausführungsform eines Schleiftellers mit befestigtem Schleifmittel und einer Auffangeinrichtung in einer schematischen Schnittansicht und
- Fig. 6: eine dritte Ausführungsform eines Schleiftellers mit befestigtem Schleifmittel in einer schematischen Schnittansicht.

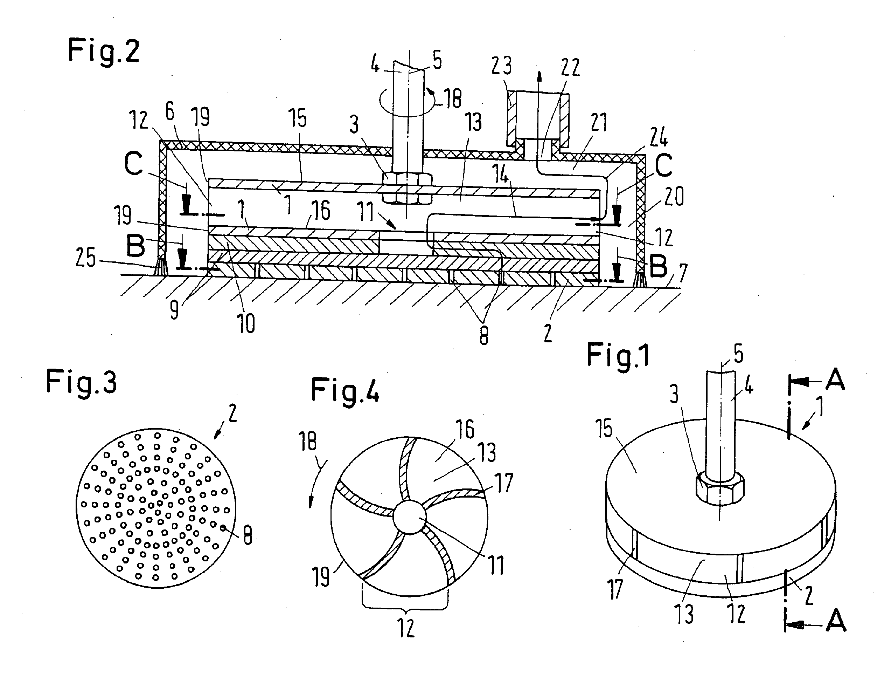

Gleiche Elemente sind in den Fig. 1 bis 6 mit identischen Bezugszahlen versehen.

Fig. 1 zeigt einen Schleifteller 1, an dem ein Schleifmittel 2 in Form einer Scheibe befestigt ist. Der Schleifteller 1 ist mit einer Befestigungsvorrichtung 3 an einer Antriebswelle 4 montiert, so daß sich bei Rotation der Antriebswelle 4 der Schleifteller 1 und das Schleifmittel 2 synchron um eine Rotationsachse 5 drehen.

In Fig. 2 ist der Schleifteller 1 in einer Seitenansicht als Schnitt A-A dargestellt, wobei der Schleifteller 1 zusätzlich von einer Auffangeinrichtung 6 umschlossen wird. Das Schleifmittel 2 liegt an einer abzuschleifenden Oberfläche 7 an. Das Schleifmittel 2 weist außerdem Durchtrittsöffnungen 8 auf, die auch in Fig. 3 gemäß Schnitt B-B zu sehen sind.

Wird nun durch die Rotation des Schleifmittels 2 am angetriebenen Schleifteller 1 die Oberfläche 7 abgeschliffen, so entstehen Schleifpartikel. Diese Schleifpartikel treten durch die Durchtrittsöffnungen 8 infolge der Saugwirkung der Geometrie des Schleiftellers 1 hindurch und gelangen in eine Klettadaptionsschicht 9, beispielsweise eine Flauschschicht, ein Klettvelours oder eine Schlingenschicht, des Schleifmittels 2. Der Schleifteller 1 weist auf seiner Befestigungsfläche eine Befestigungseinrichtung 10 in Form einer Klettadaptionsschicht auf. Diese Klettadaptionsschicht 10, z.B. eine Hakenschicht, bildet zusammen mit der Klettadaptionsschicht 9 des Schleifmittels 2 eine Befestigungsvorrichtung. Auf diese Weise wird das Schleifmittel 2 mit dem Schleifteller 1 verbunden. Die Klettadaptionsschichten 9 und 10 sind außerdem partikeldurchströmbar, so daß sich Schleifpartikel in radialer Richtung bewegen können. Dadurch, daß eine einzige mittig angeordnete Ansaugöffnung 11 näher zur Rotationsachse angeordnet ist als Austrittsöffnungen 12, entsteht durch einen Beschleunigungsraum 13 eine Saugwirkung auf die Schleifpartikel in den Durchtrittsöffnungen 8 und den Klettadaptionsschichten 9 und 10. Die Schleifpartikel werden radial in Richtung Ansaugöffnung 11 transportiert und durchströmen dann die Ansaugöffnung 11. Von dort aus bewegen sich die Schleifpartikel durch die Beschleunigungsräume 13 radial nach außen in Richtung Austrittsöffnungen 12. Die Schleifpartikel legen somit von der abzuschleifenden Oberfläche 7 bis zu den Austrittsöffnungen 12 den Weg gemäß Pfeil 14 zurück. Der Pfeil 14 ist in Fig. 2 symbolisch für eine der Durchtrittsöffnungen 8 und eine der Austrittsöffnungen 12 dargestellt. Ähnliche Wege ergeben sich für alle anderen Durchtrittsöffnungen 8 des Schleifmittels, die alle parallel von Schleifpartikeln durchströmt werden.

In Fig. 4 ist ein Schnitt C-C gemäß Fig. 2 dargestellt. In der Mitte des Schleiftellers 1 befindet sich die Ansaugöffnung 11. Durchfließen die Schleifpartikel diese Ansaugöffnung 11, so gelangen sie in die Beschleunigungsräume 13. Diese Beschleunigungsräume 13 werden durch Tellerflächen 15 und 16, sowie durch Beschleunigungseinrichtungen 17 in Form von Seitenbegrenzungen gebildet. Die Beschleunigungseinrichtungen 17 weisen hierbei eine radial verlaufende bogenförmige Geometrie auf und sind luftundurchlässig ausgebildet. Sie begrenzen die Beschleunigungsräume 13 und sind als nicht unterbrochene Begrenzung von radial innen nach radial außen ausgebildet. Die Austrittsöffnungen 12 sind am Umfang des Schleiftellers 1 gleichmäßig verteilt und weisen die Form eines Ausschnitts eines Zylindermantels auf. Durch die bogenförmige Geometrie der Beschleunigungseinrichtungen 17 entsteht eine Vorzugsrichtung 18 des Schleiftellers 1. Die Saugwirkung von der abzuschleifenden Oberfläche 7 zu den Austrittsöffnungen 12 des Schleiftellers 1 entlang des Pfeils 14 wird nur durch die Geometrie und die Rotationsbewegung des Schleiftellers 1 hervorgerufen. Eine Fremdabsaugvorrichtung ist bis dahin nicht notwendig.

Der Schleifteller 1 wird von der Auffangeinrichtung 6 umgeben, damit die austretenden Schleifpartikel aus den Austrittsöffnungen 12 nicht zurück auf die abzuschleifende Oberfläche 7 gelangen. Die Auffangeinrichtung 6 ist hier als Kunststoffhaube ausgebildet, die auch bei einer angeschlossenen Fremdabsaugvorrichtung formstabil bleibt. Die Auffangeinrichtung 6 umgibt den Schleifteller 1 so, daß zwischen dem Schleiftellerrand 19 des Schleiftellers 1 und der Auffangeinrichtung 6 ein Ringspalt 20 vorhanden ist. Der Ringspalt 20 mündet in einen Außenkanal 21, der zwischen der Tellerfläche 15 und der Auffangeinrichtung 6 angeordnet ist. Der Außenkanal 21, der sich als kreisförmige Kammer über der gesamten Tellerfläche 15 erstreckt, weist an einer Stelle eine Anschlußöffnung 22 auf. Diese Anschlußöffnung 22 ist in der Auffangeinrichtung 6 angeordnet und ermöglicht den Anschluß eines Schlauches 23, der zu einer Fremdabsaugvorrichtung führt. Nachdem die Schleifpartikel durch die Eigenabsaugeinrichtung des Schleiftellers 1 gemäß dem Pfeil 14 von der abzuschleifenden Oberfläche 7 bis zu den Austrittsöffnungen 12 gelangen, werden sie durch die angeschlossene Fremdabsaugvorrichtung von den Austrittsöffnungen 12 zur Anschlußöffnung 22 in Richtung eines zweiten Pfeils 24 geleitet und gelangen dann über den Schlauch 23 zur Fremdabsaugvorrichtung. Somit werden die Schleifpartikel der abzuschleifenden Oberfläche 7 effektiv entzogen, da bereits der Schleifteller 1 durch seine Eigenabsaugeinrichtung in Form einer Radiallüftereinrichtung die Schleifpartikel bis zum Schleiftellerrand 18 absaugt. Der Transport der Schleifpartikel auf dem Weg des Pfeils 14 wurde bei bisher bekannten Schleifvorrichtungen auch von der Fremdabsaugvorrichtung übernommen. Die Fremdabsaugvorrichtung wird nun nur noch für den Transport der Schleifpartikel gemäß dem Weg des Pfeils 24 herangezogen. Die Eigenabsaugeinrichtung des Schleiftellers 1 sorgt für den Transport der Schleifpartikel auf dem Weg des Pfeils 14.

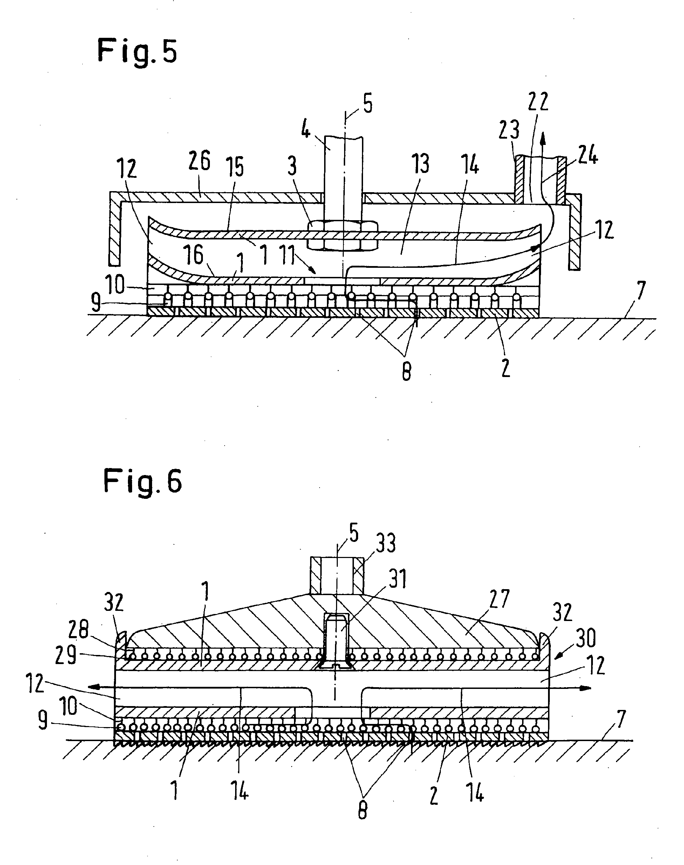

Fig. 5 zeigt eine zweite Ausführungsform des Schleiftellers 1 mit dem befestigten Schleifmittel 2. In dieser Ausführungsform weist der Beschleunigungsraum 13 Luftleitmittel auf, um die Schleifpartikel gemäß Pfeil 14 nicht nur radial nach außen zu leiten, sondern auch in vertikaler Richtung, d.h. in axialer Richtung, von der abzuschleifenden Oberfläche 7 wegzuleiten. Auf diese Weise sorgt die Eigenabsaugeinrichtung des Schleiftellers 1 dafür, daß Schleifstaub bereits durch den Schleifteller 1 in Richtung auf die Anschlußöffnung 22 der Auffangeinrichtung 26 geleitet wird. Dies hat den Vorteil, daß die Auffangeinrichtung 26 nicht mehr direkt oder in Form von Bürsten 25, wie in Fig. 2 gezeigt, an der abzuschleifenden Oberfläche 7 anliegt. Die Gefahr, daß Schleifpartikel auf die abzuschleifende Oberfläche 7 zurückgelangen, wird durch die Luftleitmittel des so gestalteten Beschleunigungsraums 13 gering gehalten. Die Bewegung der Schleifpartikel weist bereits bei Austritt aus den Austrittsöffnungen eine axiale Komponente bezüglich der Rotationsachse 5 des Schleiftellers 1 auf. Hierdurch kann die Auffangeinrichtung 26 mit Abstand oberhalb der Ebene der Befestigungsfläche des Schleiftellers 1 enden. Sie berührt die abzuschleifende Oberfläche 7 nicht. Dies hat den Vorteil, daß derjenige, der mit dem so gestalteten Schleifteller 1 und der Auffangeinrichtung 26 arbeitet, einen freien Blick auf die gerade abgeschliffene Oberfläche 7 hat. So kann er sofort das Schleifergebnis beurteilen. Auch hat die axiale Komponente der Bewegung der Schleifpartikel den Vorteil, daß sich der Weg in Richtung der Fremdabsaugvorrichtung verkürzt.

Fig. 6 zeigt eine dritte Ausführungsform mit einem herkömmlichen Schleifmittelhalter 27 ohne Eigenabsaugeinrichtung, der eine Klettadaptionsschicht 28 aufweist. Eine weitere Klettadaptionsschicht 29 an dem Schleifteller 1 als Eigenabsaugaufsatz 30 bildet zusammen mit der Klettadaptionsschicht 28 des Schleifmittelhalters 27 eine Befestigungsadaptionsschicht 28, 29. Auf diese Weise wird der Eigenabsaugaufsatz 30 mit dem Schleifmittelhalter 27 verbunden. Zur Unterstützung dieser Verbindung dient ein Befestigungselement 31 in Form einer Schraube. Zur Fixierung der Position des Eigenabsaugaufsatzes 30 an dem Schleifmittelhalter 27 weist der Eigenabsaugaufsatz 30 eine Positionieranordnung 32 auf. Bei dieser Ausführungsform dient ein umlaufender Vorsprung am Umfang des Eigenabsaugaufsatzes 30 als Positionieranordnung 32. Mit diesen Maßnahmen ist sichergestellt, daß der Eigenabsaugaufsatz 30 fest mit dem Schleifmittelhalter 27 verbunden und in radialer Richtung fixiert ist. Der Schleifmittelhalter 27 ist über ein weiteres Befestigungselement 33 in Form eines Gewindes mit der Antriebswelle verbunden.

Die Funktionsweise des Schleiftellers 1 als Eigenabsaugaufsatz 30 ist ähnlich wie bereits bei den Fig. 2 und 5 beschrieben. Der Eigenabsaugaufsatz 30 bewirkt durch seine Rotationsbewegung oder Rotations-Translations-Bewegung, daß die Schleifpartikel von der abzuschleifenden Oberfläche 7 durch die Durchtrittsöffnungen 8 des Schleifmittels 2 über eine Befestigungsadaptionsschicht 9, 10 in den Beschleunigungsraum 13 gemäß dem Pfeil 14 gelangen. Sie verlassen den Beschleunigungsraum 13 durch Austrittsöffnungen 12. Der Beschleunigungsraum 13 in Fig. 6 kann genau so, wie in Fig. 5 dargestellt, Luftleitmittel aufweisen. Auf diese Weise können die Schleifpartikel ebenfalls in axialer Richtung von der abzuschleifenden Oberfläche 7 weg bewegt werden. Die Schleifpartikel können, nachdem sie die Austrittsöffnungen 12 passiert haben, ebenfalls mit Hilfe einer Fremdabsaugvorrichtung weitertransportiert und aufgefangen werden.

## Patentansprüche

1. Schleifteller mit einer Rotationsachse und einer Befestigungsfläche zum Befestigen eines Schleifmittels, **dadurch gekennzeichnet, daß** der Schleifteller (1) als Eigenabsaugeinrichtung ausgebildet ist, die Schleifpartikel von einer Schleiffläche (7) abtransportiert und die im Schleifteller (1) integriert ist, wobei die Eigenabsaugeinrichtung mindestens eine Ansaugöffnung (11) und mindestens eine Austrittsöffnung (12) aufweist und die Ansaugöffnung (11) und die Austrittsöffnung (12) über mindestens einen Beschleunigungsraum (13) in Verbindung stehen.

2. Schleifteller nach Anspruch 1, **dadurch gekennzeichnet, daß** die Eigenabsaugeinrichtung als Radiallüftereinrichtung ausgebildet ist.

3. Schleifteller nach Anspruch 1 oder 2, **dadurch gekennzeichnet, daß** die Befestigungsfläche eine Befestigungseinrichtung (10) aufweist, die parallel zur Befestigungsfläche partikeldurchströmbar ist.

4. Schleifteller nach Anspruch 2 oder 3, **dadurch gekennzeichnet, daß** die Radiallüftereinrichtung mindestens eine Ansaugöffnung (11) und mindestens eine Austrittsöffnung (12) aufweist und die Ansaugöffnung (11) näher zur Rotationsachse (5) des Schleiftellers (1) angeordnet ist als die Austrittsöffnung (12), wobei die Ansaugöffnung (11) und die Austrittsöffnung (12) über mindestens einen Beschleunigungsraum (13) in Verbindung stehen, der mindestens eine zwischen radial innen und radial außen angeordnete Beschleunigungseinrichtung (17) aufweist.

5. Schleifteller nach Anspruch 4, **dadurch gekennzeichnet, daß** die Beschleunigungseinrichtung (17) als eine nicht unterbrochene Begrenzung den Beschleunigungsraum (13) begrenzt.

6. Schleifteller nach Anspruch 4 oder 5, **dadurch gekennzeichnet, daß** die Beschleunigungseinrichtung (17) luftundurchlässig ist.

7. Schleifteller nach einem der Ansprüche 4 bis 6, **dadurch gekennzeichnet, daß** die Summe der Flächen der Austrittsöffnungen (12) mindestens genau so groß ist wie die Summe der Flächen der Ansaugöffnungen (11).

8. Schleifteller nach einem der Ansprüche 4 bis 7, **dadurch gekennzeichnet, daß** die Austrittsöffnungen (12) am Umfang des Schleiftellers (1) gleichmäßig verteilt sind.

9. Schleifteller nach einem der Ansprüche 4 bis 8, **dadurch gekennzeichnet, daß** der Beschleunigungsraum (13) eine Umlenkung aufweist.

10. Schleifteller nach einem der Ansprüche 4 bis 9, **dadurch gekennzeichnet, daß** der Beschleunigungsraum (13) Luftleitmittel aufweist, die den Schleifpartikeln eine Austrittsrichtung mit einer axialen Richtungskomponente aus den Austrittsöffnungen (12) vermitteln.

11. Schleifteller nach einem der Ansprüche 4 bis 10, **dadurch gekennzeichnet, daß** die Radiallüftereinrichtung eine einzige Ansaugöffnung (11) aufweist, die in der radialen Mitte der Radiallüftereinrichtung angeordnet ist.

12. Schleifteller nach einem der Ansprüche 1 bis 11, **dadurch gekennzeichnet, daß** die Befestigungsfläche des Schleiftellers eine Klettadaptionsschicht aufweist.

13. Schleifteller nach einem der Ansprüche 1 bis 12, **dadurch gekennzeichnet, daß** der Schleifteller (1) eine Auffangeinrichtung (6, 26) aufweist.

14. Schleifteller nach Anspruch 13, **dadurch gekennzeichnet, daß** die Auffangeinrichtung (26) mit Abstand zur Ebene der Befestigungsfläche des Schleiftellers (1) angeordnet ist.

15. Schleifteller nach einem der Ansprüche 1 bis 14, **dadurch gekennzeichnet, daß** der Schleifteller (1) als Eigenabsaugaufsatz (30) ausgebildet ist.

16. Schleifteller nach Anspruch 15, **dadurch gekennzeichnet, daß** der Eigenabsaugaufsatz (30) eine Kontaktfläche aufweist zum Befestigen des Eigenabsaugaufsatzes (30) an einen Schleifmittelhalter (27) .

17. Schleifteller nach Anspruch 15 oder 16, **dadurch gekennzeichnet, daß** die Kontaktfläche eine Klettadaptionsschicht (28) aufweist.

18. Schleifteller nach einem der Ansprüche 15 bis 17, **dadurch gekennzeichnet, daß** der Eigenabsaugaufsatz (30) eine Positionieranordnung (32) aufweist.

19. Schleiftelleranordnung mit einem Schleifteller und einem Schleifmittel, wobei der Schleifteller eine Rotationsachse und eine Befestigungsfläche zum Befestigen eines Schleifmittels aufweist, **dadurch gekennzeichnet, daß** das Schleifmittel (2) Durchtrittsöffnungen (8) aufweist, die mit einer Eigenabsaugeinrichtung des Schleiftellers (1) in Verbindung stehen.

20. Schleiftelleranordnung nach Anspruch 19, **dadurch gekennzeichnet, daß** die Durchtrittsöffnungen (8) des Schleifmittels (2) mit Ansaugöffnungen (11) der Eigenabsaugeinrichtung über eine radial partikeldurchströmbare Klettadaptionsvorrichtung in Verbindung stehen, wobei die Klettadaptionsvorrichtung aus einer Klettadaptionsschicht (10) des Schleiftellers (1) und einer Klettadaptionsschicht (9) des Schleifmittels gebildet ist.

21. Schleiftelleranordnung nach Anspruch 19 oder 20, **dadurch gekennzeichnet, daß** die Eigenabsaugeinrichtung an eine Fremdabsaugvorrichtung angeschlossen ist.

22. Verfahren zum Entfernen von Schleifpartikeln auf einer Schleiffläche eines Schleifmittels an einem rotierenden Schleifteller, **dadurch gekennzeichnet, daß** die Schleifpartikel nach einem Durchtritt durch Ansaugöffnungen (11) nach außen durch eine Saugwirkung einer Eigenabsaugeinrichtung des Schleiftellers (1) befördert werden, so daß der Schleifteller (1) mit Hilfe der Eigenabsaugeinrichtung die Schleifpartikel von der Schleiffläche absaugt.

23. Verfahren nach Anspruch 22, **dadurch gekennzeichnet, daß** die Eigenabsaugeinrichtung des Schleiftellers (1) die Schleifpartikel zunächst in einer ersten Schicht radial nach innen in Richtung mindestens einer Ansaugöffnung (11) bewegt und nach dem Durchtritt durch eine Ansaugöffnung (11) die Schleifpartikel in einer zweiten Schicht radial nach außen bewegt.
